(19) Europäisches Patentamt
European Patent Office
Office européen des brevets

(11) **EP 3 163 292 B1**

(12) **EUROPÄISCHE PATENTSCHRIFT**

(45) Veröffentlichungstag und Bekanntmachung des Hinweises auf die Patenterteilung:
**30.11.2022   Patentblatt 2022/48**

(21) Anmeldenummer: **16195651.1**

(22) Anmeldetag: **26.10.2016**

(51) Internationale Patentklassifikation (IPC):
**G01N 21/39** (2006.01)     **G01J 3/433** (2006.01)
**G01J 3/02** (2006.01)       **G01J 3/42** (2006.01)
G01N 21/27 (2006.01)          G01J 3/28 (2006.01)

(52) Gemeinsame Patentklassifikation (CPC):
**G01N 21/39; G01J 3/027; G01J 3/42;**
G01J 2003/2866; G01J 2003/423; G01N 21/274

(54) **VERFAHREN ZUR KALIBRIERUNG UND BETRIEB EINES LASERSPEKTROMETERS**

METHOD FOR THE CALIBRATION AND USE OF A LASER SPECTROMETER

MÉTHODE DE CALIBRATION ET D'UTILISATION D'UN SPECTROMÈTRE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2015   DE 102015118238**

(43) Veröffentlichungstag der Anmeldung:
**03.05.2017   Patentblatt 2017/18**

(73) Patentinhaber: **ABB Schweiz AG**
**5400 Baden (CH)**

(72) Erfinder:
• **Angelosante, Daniele**
**5300 Turgi (CH)**
• **Maas, Deran**
**8046 Zürich (CH)**
• **Merbold, Hannes**
**8037 Zürich (CH)**
• **Brändle, Hubert**
**8102 Oberengstringen (CH)**

(74) Vertreter: **Maiwald GmbH**
**Grünstraße 25**
**40212 Düsseldorf (DE)**

(56) Entgegenhaltungen:
EP-A1- 1 927 831       WO-A1-2012/156589
US-A1- 2015 276 589

• **KANNATH A ET AL: "A VCSEL based system for on-site monitoring of low level methane emission", VERTICAL-CAVITY SURFACE-EMITTING LASERS XV, SPIE, 1000 20TH ST. BELLINGHAM WA 98225-6705 USA, Bd. 7952, Nr. 1, 10. Februar 2011 (2011-02-10), Seiten 1-9, XP060010702, DOI: 10.1117/12.874513 [gefunden am 1901-01-01]**
• **ZAVRSNIK M ET AL: "Coherence addressing of quasi-distributed absorption sensors by the FMCW method", JOURNAL OF LIGHTWAVE TECHNOLOGY, IEEE SERVICE CENTER, NEW YORK, NY, US, Bd. 18, Nr. 1, 1. Januar 2000 (2000-01-01) , Seiten 57-65, XP011450427, ISSN: 0733-8724, DOI: 10.1109/50.818907**
• **D. MASIYANO ET AL: "Use of diffuse reflections in tunable diode laser absorption spectroscopy: implications of laser speckle for gas absorption measurements", APPLIED PHYSICS B: LASERS AND OPTICS, Bd. 90, Nr. 2, 1. Februar 2008 (2008-02-01), Seiten 279-288, XP055157825, ISSN: 0946-2171, DOI: 10.1007/s00340-007-2896-z**
• **LIM LEE ET AL: "A new sensor for detection of coolant leakage in nuclear power plants using off-axis integrated cavity output spectroscopy", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, Bd. 678, 21. Februar 2012 (2012-02-21), Seiten 8-12, XP028422815, ISSN: 0168-9002, DOI: 10.1016/J.NIMA.2012.02.039 [gefunden am 2012-03-05]**

**Beschreibung**

Die Erfindung betrifft ein Verfahren zur Kalibrierung eines Laserspektrometers, wobei Laserstrahlung mit zeitlich wechselnder zentraler Wellenlänge erzeugt wird, entlang eines, durch mindestens zwei Oberflächen begrenzten, optischen Pfades durch ein zu untersuchendes Medium gelenkt wird und dabei von dem Medium teilweise transmittiert wird, und eine mit der Intensität der transmittierten Laserstrahlung korrelierende Größe gemessen wird, und ein Spektrum der Größe gebildet wird, und das Spektrum zur Ermittlung mindestens einer Stoffeigenschaft des Mediums ausgewertet wird.

Außerdem offenbart diese Beschreibung ein Laserspektrometer zur Ermittlung von mindestens einer Stoffeigenschaft eines Mediums, umfassend mindestens eine Laserstrahlungsquelle, welche Laserstrahlung mit durchstimmbarer zentraler Wellenlänge erzeugt, ein Behältnis zur Anordnung eines Mediums in einem optischen Pfad der Laserstrahlung, mindestens einen Fotosensor zur Messung einer mit der Intensität der durch das Behältnis transmittierten Laserstrahlung korrelierenden Größe, sowie mindestens eine mit dem Fotosensor verbundene Auswerteeinheit, welche dazu ausgebildet ist, ein Spektrum der Größe zu bilden und mindestens eine Stoffeigenschaft des Mediums aus dem Spektrum zu ermitteln.

Stand der Technik

Das Einsatzgebiet der Erfindung erstreckt sich auf Absorptionsspektroskopie, also auf die Bestimmung von Stoffeigenschaften, wie beispielsweise die Konzentration eines Stoffs, in einem Medium, beispielsweise einem Gas, durch Analyse des dadurch transmittierten Lichtes verschiedener Wellenlängen. Eingesetzt werden entsprechende Vorrichtungen beispielsweise in der Industrie, beispielsweise zum Nachweis von schädlichen oder gefährlichen Stoffen innerhalb einer Anlage, oder auch in der Medizin, wie etwa bei der Atemgasanalyse, beispielsweise zum indirekten Nachweis freier Radikale durch Absorptionsspektroskopie von ausgeatmeter Luft.

Zwar ist Spektroskopie grundlegend auch mit Weißlicht möglich, welches nach Absorption und Transmission durch ein zu untersuchendes Medium dispersiv, beispielsweise durch ein Prisma, wellenlängenabhängig aufgefächert wird, jedoch ist eine weit höhere spektrale Auflösung erreichbar, wenn stattdessen als Strahlungsquelle ein durchstimmbarer Laser, beispielsweise ein durchstimmbarer Halbleiterlaser (Diodenlaser) verwendet wird. Ein solcher Laser wird dann über ein Strahlungsband, also einen Wellenlängenbereich oder Frequenzbereich, in dem sich bevorzugt charakteristische Eigenschaften eines nachzuweisenden oder zu quantifizierenden Stoffes befinden, gestimmt. Vorzugsweise findet in einem solchen Strahlungsband möglichst wenig Absorption durch in diesem Zusammenhang uninteressante Hintergrundgase statt.

Die ausgesendete Laserstrahlung durchläuft dann das zu untersuchende Medium, beispielsweise ein Gas oder eine Flüssigkeit, und wird nach teilweiser Transmission durch das Medium mittels eines Fotodetektor gemessen. Der Fotodetektor misst dabei eine mit der Intensität der Laserstrahlung korrelierende Größe, wie beispielsweise die Intensität selbst, oder die Leistung, oder die Energie der Laserstrahlung. Eine an den Detektor angeschlossene Auswerteeinheit ordnet die gemessene Größe der jeweiligen zentralen Wellenlänge der Laserstrahlung zu und bildet somit ein Spektrum. Selbstverständlich kann dieses Spektrum statt auf der Wellenlänge auch auf der Frequenz der Laserstrahlung konstruiert werden. Anschließend vergleicht die Auswerteeinheit das gemessene Spektrum mit bekannten Spektralprofilen der nachzuweisenden oder zu quantifizierenden Stoffe. Somit können dann Stoffeigenschaften des Mediums nachgewiesen werden, in erster Linie also die Konzentration oder die Dichte, über genaue Messungen aber auch beispielsweise die Temperatur oder der Druck.

Die Absorption von Licht in einem Medium folgt dem lambert-beerschen Gesetz

$$I_{transmittiert} = I_0 * exp(-\alpha d)$$

Mit der transmittierten Intensität $I_{transmittiert}$, der ursprünglichen Strahlungsintensität $I_0$, dem Absorptionskoeffizienten $\alpha$ und der im Medium zurückgelegten Strecke d. Für eine genaue Analyse des transmittierten Spektrums ist also eine genaue Kenntnis dieser zurückgelegten Strecke d, also der Länge des optischen Pfades im Medium, vonnöten.

Aus der DE 10 2006 042 644 B3 geht ein Verfahren zur optischen Konzentrationsmessung hervor, bei dem die Absorption einer einzelnen Wellenlänge zur Ermittlung der Konzentration einer Komponente wie beispielsweise Staub analysiert wird. Am Ende der Strecke, die durchstrahlt wird, ist ein Retroreflektor aufgebaut, der den Strahl in Richtung des Lasers zurückwirft. Das zurückgeworfene Licht wird über einen Strahlteiler auf einen Fotosensor, der durch kurze elektrische Leitungen in der physischen Nähe des Lasers aufgebaut ist, gemessen. Somit kann die optische Pfadlänge durch Bestimmung der Laufzeit (time of flight, TOF) eines Laserpulses bestimmt werden.

Diese Lösung ist aber bei einer sogenannten cross-stack Geometrie nicht anwendbar, bei welcher der Fotosensor gegenüberliegend vom Laser auf der anderen Seite des Mediums angeordnet ist. Bei der cross-stack Geometrie führen beispielsweise lange elektrische Leitungen dazu, dass eine präzise Laufzeitmessung nicht durchgeführt werden kann. Auch ist der Abstand der Retroreflektors von dem Laser nicht notwendigerweise gleich der Länge des optischen Pfades im Medium, so dass die ermittelte Laufzeit möglichweise nicht der relevanten Strecke d entspricht.

Darüber hinaus ist aus der Veröffentlichung KANNATH A ET AL: "A VCSEL based system for on-site monitoring of low level methane emission", VERTICAL-CAVITY SURFACE-EMITTING LASERS XV, SPIE, 1000 20TH ST. BELLINGHAM WA 98225-6705 USA, Bd. 7952, Nr. 1, 10. Februar 2011 (2011-02-10), Seiten 1-9, ein Laserspektrometer bekannt, bei dem die Laserstrahlung an mindestens zwei

Oberflächen teilweise senkrecht reflektiert und teilweise transmittiert wird. Diese Veröffentlichung offenbart den Oberbegriff des Anspruchs.

Weiterhin ist aus der US 2015/276589 A1 ein Flüssigkeitsanalysesystem bekannt, bei dem die effektive Pfadlänge durch Absorbsionsmessung bei bekannter Konzentration der Messflüssigkeit ermittelt wird und bei unbekannter Konzentration der Messflüssigkeit benutzt wird.

Aufgabe und Lösung

Es ist die Aufgabe der vorliegenden Erfindung, ein Verfahren zu schaffen, mittels welcher der optische Pfad in einem Medium bei einer cross-stack Geometrie möglichst exakt und auch parallel während des Betriebs eines Laserspektrometers ermittelt werden kann.

Die Aufgabe wird ausgehend von einem Verfahren gemäß dem Oberbegriff von Anspruch 1 in Verbindung mit dessen kennzeichnenden Merkmalen gelöst.

Gegenstand der Erfindung

Die Erfindung schließt die technische Lehre ein, dass die Laserstrahlung an den mindestens zwei Oberflächen teilweise senkrecht reflektiert und teilweise transmittiert wird, und dass mindestens ein Abstand der mindestens zwei Oberflächen entlang des optischen Pfades durch Auswertung der aufgezeichneten Größe ermittelt wird.

Der Vorteil besteht insbesondere darin, dass nur Komponenten verwendet werden, die ohnehin Teil des Spektrometers bilden, und darin, dass Laserstrahlung sich beispielsweise aufgrund der hohen zeitlichen Kohärenz, der Konstanz der Lichtgeschwindigkeit und der elektronischen Regelbarkeit ganz besonders für exakte geometrische Messungen eignet.

Dieser Ermittlung kann auf zwei Wegen geschehen, die beide lediglich eine Auswertung der gemessenen und aufgezeichneten Größe, beispielsweise der Intensität, erfordern.

Bei der Erfindung wird der mindestens eine Abstand aus dem Spektrum der Größe ermittelt. Dazu ist es notwendig, dass die Strahlung als stehende Welle im Medium eingekoppelt wird. Die senkrechte Reflexion an den Oberflächen ermöglicht dies.

Dabei macht man sich zunutze, dass die beiden teilweise reflektierenden Oberflächen eine optische Kavität bilden, die für bestimmte Moden der Laserstrahlung als Resonator wirkt. Das Behältnis wirkt also gleichzeitig als Interferometer. Im Spektrum der Größe lassen sich dann nicht nur die für die Absorptionsspektroskopie wesentlichen charakteristischen Linien der zu untersuchenden Stoffe wiederfinden, sondern auch Interferenzmuster, deren Form vom Abstand der beiden Oberflächen abhängt. Daher kann durch Auswertung dieses Interferenzmusters der Abstand der Oberflächen und somit die optische Pfadlänge im Medium ermitteln werden. Der Vorteil dieser Methode ist unter anderem, dass grundsätzlich keine zusätzlichen Komponenten nötig sind, um diese Auswertung durchzuführen, und das diese Auswertung sowohl eigenständig, beispielsweise zur einmaligen Kalibrierung, als auch wie bei der Erfindung parallel während des gewöhnlichen Betriebs des Laserspektrometers durchgeführt werden kann. Auch Abstandsveränderungen durch thermische Schwankungen können somit während einer Messung erkannt und beispielsweise rechnerisch ausgeglichen werden.

Bevorzugterweise wird dabei zur Ermittlung des mindestens einen Abstands eine Fouriertransformierte des Spektrums gebildet. Aus einer solchen Fouriertransformierten lässt sich der freie spektrale Bereich (FSR) des durch die Oberflächen gebildeten Resonators bestimmen, durch welchen sich gemäß der Formel

$$d = c / (2\,n\,\Delta f)$$

mit dem freien spektralen Bereich $\Delta f$, der Lichtgeschwindigkeit im Vakuum c und dem Brechungsindex n des Mediums der Abstand der Oberflächen d, also die Länge des optischen Pfades im Medium, berechnen lässt. Der freie spektrale Bereich eines Resonators ist ein Frequenzintervall, in dem keine Mode anschwingen kann, da die reflektierte Welle destruktiv mit der eingehenden Welle interferiert.

Vorteilhaft an der Verwendung einer Fouriertransformation ist, dass diese es zulässt, aus einem Interferogramm räumliche Eigenschaften herzuleiten. Da ohnehin das Spektrum der Strahlung aufgenommen wird, ist, sofern die Oberflächen als Resonator wirken, nur dieser zusätzliche Schritt der Fouriertransformation vonnöten, um mittels der gemessenen Größe, konkret aus dem Spektrum der gemessenen Größe, den Abstand der Oberflächen und somit die Länge des optischen Pfades im Medium zu ermitteln.

Alternativ zu einer Fouriertransformation ist es auch möglich, den freien spektralen Bereich oder direkt die optische Pfadlänge im Medium über andere rechnerische Methoden oder Algorithmen aus dem Spektrum der Größe zu ermitteln, beispielsweise durch Bestimmung des Abstands von benachbarten Maxima im Spektrum.

Vorzugsweise kann zusätzlich auf das Spektrum ein Hochpassfilter angewendet werden, da die Modulation des Absorptionsspektrums durch die Resonatormoden bei üblichen Abständen im Zentimeter- oder Dezimeterbereich eine höhere Frequenz aufweist als das Absorptionsspektrum selbst. Anstelle eines simplen, beispielsweise binären, Hochpassfilters kann bevorzugt auch ein Hochpassfilter benutzt werden, der insbesondere ein bekanntes charakteristisches Transmissionsprofil des Mediums herausfiltert.

Definiert wird das Verfahren der Erfindung weiterhin dadurch, dass während der Ermittlung der mindestens eigenen Stoffeigenschaft mindestens eine der mindestens zwei Oberflächen in mechanische Schwingung versetzt wird, und das während der Ermittlung des mindestens einen Abstands jede der mindestens zwei Oberflächen bewegungslos gehalten wird.

Durch mechanisches Oszillieren der reflektierenden Oberflächen können stabile Schwingungsmoden der Laserstrahlung unterdrückt werden, so dass diese die Messung von Stoffeigenschaften nicht störend beeinflussen können.

Bei einem alternativen Verfahren außerhalb der Erfindung wird der mindestens eine Abstand statt aus dem Spektrum der Größe aus dem zeitlichen Verlauf der Größe ermittelt.

Dazu wird beispielsweise ein Laserpuls oder, für höhere Genauigkeit, frequenzmodulierte Laserstrahlung ausgesendet, und die Impulsantwort auf die ausgesendete Strahlung durch einen Detektor, vorzugsweise in der physischen Nähe des Lasers, gemessen. Der Vorteil dieser Methode besteht darin, dass keine zusätzliche optische Komponente, wie ein Retroreflektor, vonnöten ist, da der Laserstrahl an den das Medium begrenzenden Oberflächen nicht nur transmittiert sondern auch teilweise senkrecht reflektiert wird, so dass automatisch ein Teil der Strahlung zurück in Richtung der Laserstrahlungsquelle geworfen wird, wo er dann beispielsweise mit Hilfe eines Strahlteilers auf einen Fotosensor gelenkt werden kann, um dann mittels einer daran angeschlossenen Auswerteeinheit das genannte Verfahren durchzuführen. Es ist somit vorteilhafterweise möglich, anders als im zitierten Stand der Technik, die Länge eines optischen Pfades in einem zu untersuchenden Medium in cross-stack Geometrie durch Laufzeitmessung zu bestimmen.

Während das senkrechte Reflektieren bei der Ermittlung des Abstandes über das Spektrum, wie bei der Erfindung, vorzugsweise über den freien spektralen Bereich, dazu dient, eine Welle in den somit geschaffenen Resonator einzukoppeln, dient das senkrechte Reflektieren bei der Ermittlung über die Laufzeit dazu, die Laserstrahlung zurück in die Nähe des Lasers zu lenken.

Bei der Auswertung der Laufzeit können auch die verschiedenen Reflexionen an anderen Oberflächen, beispielsweise an Vor- und Rückseite von Fenstern oder Linsen, berücksichtigt werden.

Ebenso können bei der Auswertung des Spektrums mehrere Abstände ermittelt werden, die durch die Oberflächen verschiedener optischen Komponenten, wie von Linsen oder Filtern, innerhalb des Mediums definiert werden.

Diese Bescreibung schließt ebenfalls die technische Lehre ein, dass bei einem nicht beanspruchten Laserspektrometer der optische Pfad im Medium durch mindestens zwei senkrecht zum optischen Pfad orientierte Oberflächen begrenzt ist, und dass die mindestens eine Auswerteeinheit dazu ausgebildet ist, mindestens einen Abstand der mindestens zwei Oberflächen mittels der gemessenen Größe zu ermitteln.

Dadurch, insbesondere durch geeignete Auswerteeinheiten, und durch ausreichend genau orientierte Oberflächen, ist es möglich, eines der zuvor genannten Verfahren auszuführen. Die Vorteile umfassen, dass es mit Hilfe schon vorhandener optischer Elemente parallel zur Ermittlung von Stoffeigenschaften möglich ist, die Länge des optischen Pfades in einer cross-stack Geometrie zu ermitteln.

Vorzugsweise ist die mindestens eine Auswerteeinheit dazu ausgebildet, den mindestens einen Abstand durch Auswertung des Spektrums der Größe, vorzugsweise durch Bestimmung des freien spektralen Bereich des durch die Oberflächen konstruierten optischen Resonators, zu ermitteln.

Ebenfalls bevorzugt ist die mindestens eine Auswerteeinheit entweder alternativ oder zusätzlich dazu derart ausgebildet, den mindestens einen Abstand aus dem zeitlichen Verlauf der Größe, also beispielsweise der Impulsantwort eines Laserpulses, zu ermitteln.

Besonders bevorzugt ist ein Beispiel des nicht beanspruchten Laserspektrometers, bei dem das Laserspektrometer genau eine Strahlungsquelle aufweist, welche Laserstrahlung zur Ermittlung sowohl der mindestens einen Stoffeigenschaft als auch des mindestens einen Abstands erzeugt. Damit ist gemeint, dass im Betrieb die Laserstrahlung des genau einen Lasers von dem mindestens einen Sensor gemessen wird und dann das Messergebnis durch die mindestens eine Auswerteeinheit sowohl zur Bestimmung der Stoffeigenschaft als auch zur Bestimmung der Länge des optischen Pfades im Medium verwendet wird.

Ein solcher Aufbau ist besonders kompakt und hat beispielsweise den Vorteil, dass nur ein Laser und nur Typ von Fotosensor, der für einen einzelnen Wellenlängenbereich empfindlich ist, für die Ermittlung von Stoffeigenschaften und für die Ermittlung des Abstandes vonnöten ist.

Ebenfalls bevorzugt ist ein Beispiel, bei der eine erste Laserstrahlungsquelle erste Laserstrahlung in einem Wellenlängenbereich zur Ermittlung der mindestens einen Stoffeigenschaft erzeugt und eine zweite Laserstrahlungsquelle zweite Laserstrahlung in einen zweiten Wellenlängenbereich zur Ermittlung des mindestens einen Abstands erzeugt. Beide Laserstrahlungen sollen dabei vorzugsweise innerhalb des Mediums dem gleichen optischen Pfad folgen.

Dadurch ist es vorteilhafter Weise sehr einfach möglich, die Ermittlung der Stoffeigenschaften von der Ermittlung des Abstandes zu entkoppeln. Es ist beispielsweise möglich, jeweils Wellenlängenbereiche zu wählen, die für ihre jeweilige Aufgabe besonders geeignet sind.

Vorzugsweise ist dabei mindestens eine der Oberflächen dazu ausgebildet, Laserstrahlung in dem ersten Wellenlängenbereich schwächer zu reflektieren als in dem zweiten Wellenlängenbereich. Erreicht wird dies beispielsweise durch eine Antireflexbeschichtung auf einer oder auf mehreren der Oberflächen im optischen Pfad, wobei diese Antireflexbeschichtung auf den ersten Wellenlängenbereich angepasst ist. Somit wird erreicht, dass die Resonatormoden, die für die Längenbestimmung nützlich sind, stärker oder ausschließlich bei der für die Längenbestimmung vorgesehenen zweiten Laserstrahlung im zweiten Wellenlängenbereich anschwingen, und dass somit die Ermittlung der Stoffeigenschaften mittels der ersten Laserstrahlung nicht durch diese Interferenzeffekte erschwert wird.

In einem weiteren Beispiel weist das Laserspektrometer einen ersten Fotosensor zur Ermittlung der mindestens einen Stoffeigenschaft und einen zweiten Fotosensor zur Ermittlung des Abstands der Oberflächen auf.

Dadurch ist es vorteilhafterweise möglich, die beiden entsprechenden Messungen weiter zu entkoppeln. Relevant ist dies sowohl bei der Längenbestimmung durch Auswertung des Spektrums als auch insbesondere bei Auswertung des zeitlichen Verlaufs der aufgezeichneten Größe, da in diesem Fall der zweite Sensor in der Nähe des Lasers angeordnet werden sollte.

Außerdem ist es auch bei Anordnungen beider Fotosensoren hinter dem Behältnis möglich die Ermittlung von Stoffeigenschaften und die Ermittlung der Länge des optischen Pfades gänzlich zu entkoppeln, in dem die jeweilig benötigten Größen über verschiedene Sensoren gemessen werden. Eine Aufteilung Laserstrahlung, die innerhalb des Mediums koaxial verläuft, auf die beiden Fotosensoren, lässt sich beispielsweise mit Hilfe eines gegebenenfalls wellenlängenabhängigen Strahlteilers realisieren.

Ganz besonders bevorzugt ist ein Beispiel, bei der genau ein Fotosensor zur Ermittlung sowohl der mindestens einen Stoffeigenschaft als auch des mindestens einen Abstands vorgesehen ist.

Der Vorteil hierbei ist, dass Fotosensorik durch die Auswerteeinheit dazu verwendet werden kann, sowohl die Stoffeigenschaft als auch den Abstand zu ermitteln, da sich beide Informationen in dem einen aufgenommenen Spektrum überlagert wiederfinden. Im Gegensatz zu Laserspektrometern des Standes der Technik ist nur ein geeignetes, als Resonator wirkendes, Behältnis und eine beispielsweise geeignet programmierte Auswerteeinheit vonnöten, aber keine zusätzliche Sensorik zur Längenbestimmung.

Spezieller Beschreibungsteil

Weitere die Erfindung verbessernde Maßnahmen werden nachstehend gemeinsam mit der Beschreibung eines bevorzugten Ausführungsbeispiels der Erfindung anhand der sechs Figuren näher dargestellt. Es zeigen:

Figur 1   ein Beispiel eines zur Ausführung der Erfindung geeigneten Laserspektrometers,

Figur 2   ein zweites Beispiel eines Laserspektrometers mit zwei Fotosensoren, wobei der Abstand der Oberflächen wahlweise durch Laufzeitbestimmung ermittelt wird,

Figur 3   ein drittes Beispiel eines Laserspektrometers mit zwei Lasern,

Figur 4   ein viertes Beispiel eines Laserspektrometers mit zwei Lasern und zwei Fotosensoren,

Figur 5   eine schematische Darstellung eines Spektrums der aufgezeichneten Größe, und

Figur 6   das Schema eines durch Fouriertransformation des Spektrums gewonnenen Graphs, an dem die zu ermittelnden Abstände erkennbar sind.

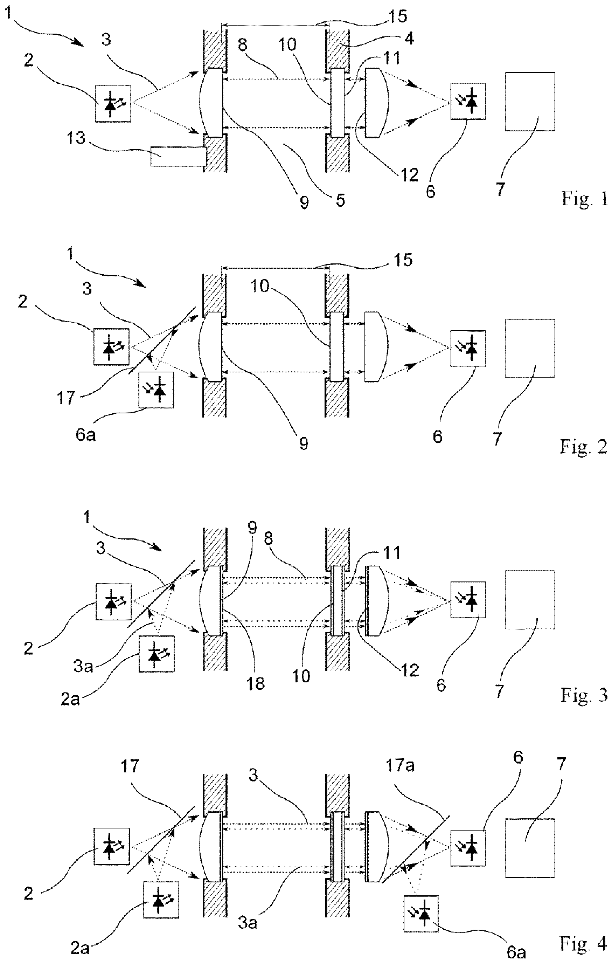

Gemäß Figur 1 umfasst ein Laserspektrometer 1 eine Laserstrahlungsquelle 2, welche Laserstrahlung 3 durch ein Behältnis 4 und ein darin angeordnetes Medium 5 auf einen Fotosensor 6 ausstrahlt. Der Fotosensor 6 und auch die Laserstrahlungsquelle 1 ist dabei mit einer Auswerteeinheit 7 verbunden. Die Laserstrahlung 3 folgt dabei einem optischen Pfad 8, welcher innerhalb des Mediums 5 durch zwei Oberflächen 9, 10 von als Linse und Fenster wirkenden optischen Elementen begrenzt wird. Die Oberflächen 9, 10 stehen dabei senkrecht auf dem optischen Pfad 8. Dadurch entsteht die durch beidseitige Pfeile gekennzeichnete stehende Welle zwischen den als Resonator wirkenden Oberflächen 9, 10. Auch außerhalb des Behältnisses wirken die dritte Oberfläche 11 und die vierte Oberfläche 12 als vergleichsweiser kleinerer Resonator. Mechanisch mit der ersten Oberfläche 9 ist eine Anregungsvorrichtung 13 verbunden, welche die erste Oberfläche 9 wahlweise in Schwingung versetzen kann.

Wird das Laserspektrometer 1 im Betrieb zur Ermittlung mindestens einer Stoffeigenschaft verwendet, beispielsweise zur Ermittlung der Konzentration eines bestimmten Stoffs in dem Medium 5, so erzeugt die Laserstrahlungsquelle 2 Laserstrahlung 3 mit wechselnder zentraler Wellenlänge 14, wobei die durch das Medium 5 transmittierte Laserstrahlung 3 mit dem Fotosensor 6 gemessen und durch die Auswerteeinheit 7 in ein Spektrum umgewandelt und mit bekannten charakteristischen Profilen abgeglichen wird.

Zur Ermittlung des Abstands 15 zwischen den das Medium 5 begrenzenden Oberflächen 9, 10 wertet die Auswerteeinheit 7 im Betrieb ebenfalls das Spektrum 19 der durch den Fotosensor 6 gemessenen Größe 16, hier der Intensität der Laserstrahlung 3, aus. Dazu wird beispielsweise durch eine Fouriertransformation des Spektrums 19 der freie spektrale Bereich (FSR) des Resonators, der durch die Oberflächen **9**, **10** gebildet wird, errechnet, und anschließend aus dem FSR der Abstand **15** hergeleitet.

Dabei wird insbesondere also genau eine Laserstrahlungsquelle **2** und auch genau ein Fotosensor **6** zur Ermittlung sowohl der Stoffeigenschaft, hier der prozentualen Konzentration eines bestimmten Gases im Medium **5**, als auch zur Ermittlung des Abstands **15** verwendet.

In Figur 2 wird bei einem alternativen Beispiel eines Laserspektrometers **1** ein zweiter Fotosensor **6a** in der Nähe der Laserstrahlungsquelle **2** angeordnet. Licht, das beispielsweise an der zweiten Oberfläche **10** reflektiert wird, gelangt über einen Strahlteiler **17** auf den zweiten Fotosensor **6a**. Hier kann die Auswerteeinheit **7** das Signal des ersten Fotosensors **6** zur Ermittlung von Stoffeigenschaften und / oder dem Abstand **15** zwischen den Oberflächen **9**, **10** durch Berechnung des freien spektralen Bereichs aus dem Spektrum **19** verwenden, und außerdem mittels des zweiten Fotosensors **6a** die Stoffeigenschaften und / oder den Abstand **15** über Laufzeitbestimmung ermitteln. Letzteres ist möglich, da sich der zweite Fotosensor **6a** in der Nähe der Laserstrahlungsquelle **2** befindet und somit nur kurze elektrische Leitungen vonnöten sind, die eine Laufzeitbestimmung nicht beispielsweise durch Jitter verfälschen. Die Laserstrahlungsquelle **2** kann dabei beispielsweise frequenzmodulierte Laserstrahlung oder Laserpulse aussenden, um die Laufzeitbestimmung zu vereinfachen.

Gemäß Figur 3 ist bei einem alternativen Beispiel eines Laserspektrometers **1** eine erste Laserstrahlungsquelle **2** und eine zweite Laserstrahlungsquelle **2a** vorgesehen, welche jeweils Laserstrahlung **3**, **3a** verschiedener Wellenlängenbereiche, gekennzeichnet durch die verschieden gestrichelten Pfeile, erzeugen. Die zweite Laserstrahlung **3a** wird dabei über einen Strahlteiler **17** auf den optischen Pfad **8** der ersten Laserstrahlung **3** gelenkt. Um eine solche Justage zu vereinfachen, ist es sinnvoll, mit optisch sichtbarer Laserstrahlung zu arbeiten. Sämtliche senkrecht auf dem optischen Pfad **8** stehende Oberflächen **9**, **10**, **11**, **12** sind jeweils mit einer Antireflex-Beschichtung **18** beschichtet, welche Strahlung vom Wellenlängenbereich der ersten Laserstrahlung **3** nicht reflektiert. Somit wird die erste Laserstrahlung **3** insbesondere nicht in den durch die erste und die zweite Oberfläche **9**, **10** konstruierten Resonator eingekoppelt, wodurch sich diese Laserstrahlung **3** besonders zur Bestimmung von Stoffeigenschaften eignet, da deren Transmissionsspektrum nicht durch Interferenzeffekte verfälscht wird. Die Laserstrahlung **3a** hingegen wird in den Resonator eingekoppelt. Sofern also die Wellenlängenbereiche jeweils geschickt gewählt werden, wird das Spektrum der Laserstrahlung **3** nur durch die Stoffeigenschaften, und das Spektrum der Laserstrahlung **3a** nur durch die interferometrischen Eigenschaften des durch die Oberflächen **9**, **10** gebildeten Resonators moduliert. Somit lassen sich dann Stoffeigenschaften und Länge des optischen Pfades im Medium gänzlich ungestört voneinander ermitteln.

Gemäß Figur 4 wird im Unterschied zu dem Beispiel aus Figur 3 ein zweiter Fotosensor **6a** eingesetzt, auf den die zweite Laserstrahlung **3a** mittels eines wellenlängenselektiven Strahlteilers **17a** gelenkt wird. Somit lassen sich dann die Ermittlung von Stoffeigenschaften und die Ermittlung der Resonatorlänge auch unproblematisch durchgehend gleichzeitig durchführen. Durch diese vollständige Entkopplung der beiden Messungen wird die Genauigkeit der Messergebnisse weiter erhöht.

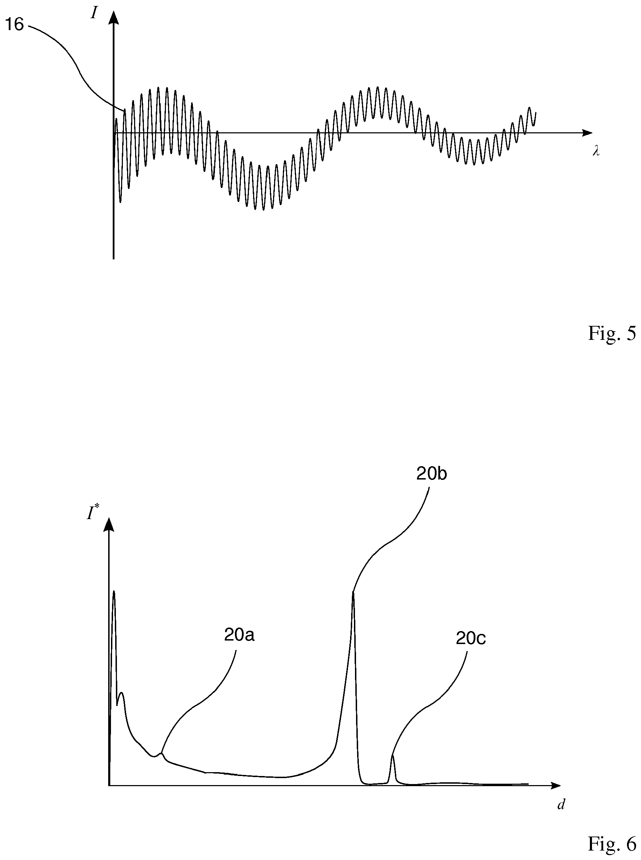

In Figur 5 ist ein als Schema generiertes Spektrum einer Größe **16** in Form der Intensität **I** der transmittierten Laserstrahlung über deren Wellenlänge **A** aufgetragen. Erkennbar ist die Überlagerung von einer niederfrequenten Absorptionskennlinie, die für die im Medium **5** enthaltenen Stoffe charakteristisch ist, und einem hochfrequenten Frequenzmuster, wobei zwei benachbarte Maxima des hochfrequenten Frequenzmusters dem freien spektralen Bereich (FSR) $\Delta f$ entsprechen.

Die Größe **16** wird dabei im Betrieb von einem Fotosensor **6** hinter der cross-stack Anordnung gemessen. Eine Auswerteeinheit ordnet die momentan gemessene Größe **16** der jeweiligen Wellenlänge **A** zu und erzeugt somit das abgebildete Spektrum.

In Figur 7 ist eine als Schema generierte Fouriertransformierte **I\*** des in Figur 5 dargestellten Spektrums der Größe **16** in Form der Intensität **I** gezeigt. Hier ist es möglich, die Maxima **20a**, **20b**, **20c** jeweils einem Abstand von zwei Oberflächen zuzuordnen, zwischen denen Laserstrahlung eingekoppelt wurde. Dabei entspricht, mit Bezug auf die Figuren 1 bis 4, das Maximum **20a** dem Abstand zwischen den Oberflächen **11**, **12**; das Maximum **20b** dem Abstand zwischen den Oberflächen **9**, **10** und das Maximum **20c** dem Abstand zwischen den Oberflächen **9**, **11**. Für die weitere Auswertung gemäß dem lambert-beerschen Gesetz ist nur die Länge des optischen Pfades **8** im Medium **5**, in welchem die Laserstrahlung **3** absorbiert wird, interessant. Diese ist gegeben durch den Abstand zwischen den an das Medium grenzenden Oberflächen **9**, **10** und entspricht somit dem zum Maximum **20b** zugeordneten Abstand **d**. Wäre statt wie in den Ausführungsbeispielen der Figuren 1 bis 4 beispielsweise die Oberfläche **12**, statt der Oberfläche **10**, eine Begrenzung des Mediums **5**, so würde die Länge **d** des optischen Pfades **8** im Medium **5** durch die Summe der den Maxima **20a, 20b** zugeordneten Abständen **d** vorgegeben sein.

Die übrige Struktur des Graphen zwischen dem Ursprung der **d**-Achse und dem Maximum **20a** entsteht durch die vergleichsweise niederfrequenten Absorptionskennlinien des Mediums **5** und kann beispielsweise durch einen, auf das in Figur 5 dargestellte Spektrum angewendeten, Hochpassfilter zusätzlich entfernt werden.

**Bezugszeichenliste**

| 1 | Laserspektrometer |
|---|---|
| 2, 2a | Laserstrahlungsquelle |
| 3, 3a | Laserstrahlung |
| 4 | Behältnis |
| 5 | Medium |
| 6, 6a | Fotosensor |
| 7 | Auswerteeinheit |
| 8 | optischer Pfad |
| 9 | erste Oberfläche |
| 10 | zweite Oberfläche |
| 11 | dritte Oberfläche |
| 12 | vierte Oberfläche |
| 13 | Anregungsvorrichtung |
| 14 | Wellenlänge |
| 15 | Abstand |
| 16 | Größe |
| 17, 17a | Strahlteiler |
| 18 | Antireflex-Beschichtung |
| 19 | Spektrum |
| 20a, 20b, 20c | Maxima |

**Patentansprüche**

1. Verfahren zur Kalibrierung und zum Betrieb eines in cross-stack Geometrie aufgebauten Laserspektrometers (1), wobei Laserstrahlung (3) mit zeitlich wechselnder zentraler Wellenlängen (14) erzeugt wird, entlang eines, durch mindestens zwei Oberflächen (9, 10) begrenzten, optischen Pfades (8) durch ein zu untersuchendes Medium (5) gelenkt wird und dabei von dem Medium (5) teilweise transmittiert wird, und eine mit der Intensität der transmittierten Laserstrahlung korrelierende Größe (16) aufgezeichnet wird, und ein Spektrum (19) der Größe (16) gebildet wird, und das Spektrum (19) zur Ermittlung mindestens einer Stoffeigenschaft des Mediums (5) ausgewertet wird, wobei die Laserstrahlung (3) an den mindestens zwei Oberflächen (9, 10) teilweise senkrecht reflektiert und teilweise transmittiert wird,

   **dadurch gekennzeichnet, dass** zur einmaligen und parallel während des Betriebes erfolgenden Kalibrierung mindestens ein Abstand (15) der mindestens zwei Oberflächen (9, 10), d.h. eine Länge des optischen Pfades (8) im Medium (5), durch Auswertung der aufgezeichneten Größe (16) ermittelt wird, wobei der mindestens eine Abstand (15) durch Auswertung des Interferenzmusters des Spektrums (19) der Größe (16) ermittelt wird, wobei während der Ermittlung der mindestens einen Stoffeigenschaft mindestens eine der mindestens zwei Oberflächen (9, 10) in mechanische Schwingung versetzt wird, und während der Ermittlung des mindestens einen Abstands (15) jede der mindestens zwei Oberflächen (9, 10) bewegungslos gehalten wird.

**Claims**

1. Method for the calibration and operation of a laser spectrometer (1) constructed using cross-stack geometry, wherein laser radiation (3) having central wave lengths (14) changing over time is generated, is directed along an optical path (8) through a medium (5) to be examined, said optical path being delimited by at least two surfaces (9, 10), and in the process is partially transmitted by the medium (5), and a variable (16) correlating with the intensity of the transmitted laser radiation is recorded, and a spectrum (19) of the variable (16) is formed, and the spectrum (19) is evaluated in order to determine at least one substance property of the medium (5), wherein the laser radiation (3) is partially perpendicularly reflected and partially transmitted at the at least two surfaces (9, 10),

   **characterized in that** for calibration done once and effected in parallel during operation, at least one distance (15) between the at least two surfaces (9, 10), i.e. a length of the optical path (8) in the medium (5), is determined by evaluation of the recorded variable (16), wherein the at least one distance (15) is determined by evaluation of the interference pattern of the spectrum (19) of the variable (16), wherein at least one of the at least two surfaces (9, 10) is caused to mechanically oscillate during the determination of the at least one substance property, and each of the at least two surfaces (9, 10) is kept motionless during the determination of the at least one distance (15).

**Revendications**

1. Procédé d'étalonnage et de fonctionnement d'un spectromètre laser (1) construit en géométrie à faisceaux croisés (cross-stack), un rayonnement laser (3) étant généré avec des longueurs d'onde centrales (14) qui varient dans le temps, étant dévié à travers un milieu (5) à examiner le long d'un chemin optique (8) délimité par au moins deux surfaces (9, 10) et étant alors partiellement transmis par le milieu (5), et une grandeur (16) corrélée à l'intensité du rayonnement laser transmis étant acquise, et un spectre (19) de la grandeur (16) étant formé, et le spectre (19) étant évalué pour déterminer au moins une propriété de matière du milieu (5), le rayonnement laser (3) étant partiellement réfléchi perpendiculairement et partiellement transmis par les au moins deux surfaces (9, 10),

   **caractérisé en ce que** pour l'étalonnage unique qui a lieu en parallèle pendant le fonctionnement, au moins une distance (15) entre les au moins deux surfaces (9, 10), c'est-à-dire une longueur du chemin optique (8) dans le milieu (5), est déterminée par évaluation de la grandeur acquise (16), l'au moins une distance (15) étant déterminée par évaluation du modèle d'interférence du spectre (19) de la grandeur (16), l'une au moins des au moins deux surfaces (9, 10) étant mise en vibration mécanique pendant la détermination de l'au moins une propriété de matière et chacune des au moins deux surfaces (9, 10) étant maintenue immobile pendant la détermination de l'au moins une distance (15).

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006042644 B3

- US 2015276589 A1

**In der Beschreibung aufgeführte Nicht-Patentliteratur**

- **KANNATH A et al.** A VCSEL based system for on-site monitoring of low level methane emission. *VERTICAL-CAVITY SURFACE-EMITTING LASERS XV, SPIE, 1000 20TH ST. BELLINGHAM WA 98225-6705 USA,* 10. Februar 2011, vol. 7952 (1), 1-9